# EUROPÄISCHE PATENTSCHRIFT

(11) **EP 4 174 234 B1**
(45) Veröffentlichungstag und Bekanntmachung des Hinweises auf die Patenterteilung: **10.04.2024**
(21) Anmeldenummer: 22202843.3
(22) Anmeldetag: 20.10.2022
(51) Int. Cl.: B62D 25/12, E02F 9/08

(54) **ARBEITSMASCHINE MIT EINER ABDECKEINHEIT ZUM ABDECKEN ODER ÖFFNEN EINER ÖFFNUNG**
WORKING MACHINE WITH A COVER UNIT FOR COVERING OR OPENING AN OPENING
MACHINE DE TRAVAIL AVEC UNE UNITÉ DE RECOUVREMENT POUR COUVRIR OU OUVRIR UNE OUVERTURE

(30) Priorität: 29.10.2021 DE 102021128299
(43) Veröffentlichungstag der Anmeldung: 03.05.2023
(73) Patentinhaber: Wacker Neuson Produktion GmbH & Co. KG, 85084 Reichertshofen (DE)
(72) Erfinder: Bartl, Andreas, 85457 Wörth (DE); Hartmann, Robert, 80939 München (DE); Rupp, Ferdinand, 80639 München (DE)
(74) Vertreter: Otten, Roth, Dobler & Partner mbB Patentanwälte

(56) Entgegenhaltungen:
- DE-A1-102011 056 955
- DE-A1-102015 112 126
- DE-A1-102016 015 032
- DE-A1-102019 135 805

## Beschreibung

Die Erfindung betrifft eine mobile Arbeitsmaschine mit einem Tragrahmen und mit einer Antriebseinheit zum Antreiben wenigstens eines Antriebselementes und/oder eines Arbeitselementes, wobei wenigstens eine um eine Schwenkachse verstellbare Abdeckeinheit zum Abdecken/Schließen oder Öffnen einer Öffnung, insbesondere einer Tragrahmenöffnung des Tragrahmens zum Abdecken der Antriebseinheit, vorgesehen ist, gemäß dem Oberbegriff des Anspruchs 1.

### Stand der Technik

Mobile Arbeitsmaschine, insbesondere Radlader, Teleskoplader, Bagger, Traktor oder dergleichen, mit einem Fahrzeugrahmen und mit einer Antriebseinheit zum Antreiben wenigstens eines Antriebselementes wie eines Laufrades oder Laufkette, werden heutzutage meist mit einem nachfüllbaren Kraftstoff betrieben. Dabei kommen heute hauptsächlich dieselgetriebene Fahrzeuge zum Einsatz. Zwischenzeitlich sind bereits auch elektrisch angetriebene Maschinen im Einsatz. Außer bei z.B. Radladern mit großen Schaufeln am Hubarm weisen moderne, mobile Arbeitsmaschinen vielfach lösbar verbindbare Arbeitswerkzeuge auf, z.B. die mittels sog. "Schnellwechslern" bzw. "Wechselplatten" gehalten bzw. gelöst werden.

Darüber hinaus sind als mobile Arbeitsmaschinen auch Bodenverdichtungsvorrichtungen zum Verdichten eines Bodenbereiches, wie Vibrationsstampfer, Vibrationsplatten oder Walzen etc., bereits allgemein bekannt und seit Jahrzehnten auf diversen Baustellen im Einsatz, z.B. EP 1 097 272. So umfassen vor allem Stampfer oder Vibrationsplatten eine Obermasse mit einem Motor, d.h. im Allgemeinen einen Verbrennungs- oder Elektromotor, und eine dazu relativ bewegliche Untermasse mit dem Stampffuß bzw. der Bodenplatte. Meist wird mittels Federpaketen die Relativbewegung zwischen Ober- und Untermasse gedämpft.

Stampfer oder Vibrationsplatten sind dementsprechend mobil eingesetzte Bau-/Arbeitsgeräte, die üblicherweise über Fliehkraft-Erreger an der Untermasse mechanische Energie in den Boden eintragen und ihn dadurch verschieben und verdichten. Der Antrieb der Fliehkraft-Erreger erfolgt durch Benzin-, Diesel- oder Elektromotoren, die in der Regel auf der gegenüber der Untermasse elastisch verkoppelten Obermasse angeordnet sind.

Derartige mobile Arbeitsmaschinen werden beim Betrieb unter den rauen sowie schmutzigen Baustellenbedingungen und vor allem den hohen mechanischen Belastungen sowie Vibrationen stark beansprucht. Gerade an Komponenten wie die Abdeckungen von diversen Öffnungen und deren Scharniere sowie Verschlüsse müssen besondere Anforderungen erfüllen, um auf Dauer Stand halten zu können. Zudem sollten diese vergleichsweise kostengünstig sein.

So werden z.B. einerseits vergleichsweise einfach bebaute Haubenspanner bzw. Zugriegel aus Gummi und andererseits relativ aufwendige und teure, metallische Spannschlösser oder gar komplex aufgebaute und mit Schlüsseln verschließbare Tür- bzw. Haubenschlösser mit Spiralfedermechanismus etc. eingesetzt.

Nachteilig hierbei ist jedoch, dass diese teilweise sehr teuer oder unangenehm zu öffnen sind oder dass diese bei starken Erschütterungen selbsttätig aufspringen oder relativ schnell verschleißen und kaputt gehen. DE 10 2015 112 126 A1 betrifft eine landwirtschaftliche Arbeitsmaschine mit einer bekannten Motorhaubenbefestigung.

### Aufgabe und Vorteile der Erfindung

Aufgabe der Erfindung ist es demgegenüber, eine mobile Arbeitsmaschine vorzuschlagen, die wenigstens teilweise die Nachteile des Standes der Technik verbessert, insbesondere wirtschaftlich günstig verwirklicht werden kann und/oder von Hand für den Bediener angenehm geöffnet werden kann und/oder ein unerwünschtes Aufspringen bzw. Lösen wirkungsvoll verhindert wird.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße mobile Arbeitsmaschine dadurch aus, dass der Freigabeweg des Öffnens größer als der Fixierweg des Fixierens ist.

Mit Hilfe dieser Maßnahme wird erreicht, dass die Öffnung vom Bediener mit geringer Kraft geschlossen bzw. abgedeckt werden kann und dass die Abdeckung, insb. Haube oder Tür, auch bei großen Erschütterungen bzw. Vibrationen im Betrieb nicht selbsttätig aufgeht bzw. sich öffnet. So ist der Energieaufwand für das Öffnen vergleichsweise groß, was dazu führt, dass im Betreib das Aufspringen bzw. Öffnen wirkungsvoll verhindert, jedoch ein Öffnen von Hand mit vergleichsweise geringer Kraft über den relativ langen Freigabeweg realisierbar ist. Das bedeutet, dass der Bediener zwar einen relativ langen Weg und damit eine etwas längere Zeit für das Öffnen benötigt, jedoch die Handkraft bzw. Öffnungskraft vergleichsweise gering ist. Trotzdem wird ein selbsttätiges Öffnen bzw. Aufspringen verhindert, da eine in Richtung Öffnen ausgerichtete Erschütterung oder Vibration im rauen Arbeits-/Baubetrieb zwar durchaus eine größere Kraft aufweisen kann, jedoch diese nur sehr kurz in Richtung Öffnen wirksam ist bzw. nicht die für das Öffnen notwendige Energie aufbringt, um das Hindernis zu überwinden.

Dies stellt eine Abkehr von bisherigen, jahrzehntelang praktizierten Prinzipien bei Verschlusseinheiten für Abdeckungen von Öffnungen bei Bau-/Arbeitsmaschinen mit stärkeren Erschütterungen bzw. Vibrationen im Betrieb dar.

Vorzugsweise ist der Fixierweg und der Freigabeweg derart im Sinn der Erfindung definiert, dass der Fixierweg des Fixierens sich von einer Erstkontaktposition bis zu der Verschlussposition erstreckt, wobei die Erstkontaktposition als erste Kontaktposition in Richtung des Verstellweges beim Fixieren ausgebildet ist und/oder dass der Freigabeweg des Öffnens sich von der Verschlussposition als Öffnungsanfangskontaktposition bis zu einer End-Kontaktposition erstreckt, wobei die End-Kontaktposition als letzte Loslass-Kontaktposition in Richtung des Verstellweges beim Öffnen ausgebildet ist. Das bedeutet, dass sich diese beiden erfindungsgemäßen Wege im Wesentlichen erstrecken, einerseits von/bis der sog. "normalen" Verschlussposition bzw. Ruheposition und andererseits bis/von jeweils einer Position, in der sich das erste und das zweite Verschlusselement gerade noch berühren bzw. Kontakt haben. Diese zwei Positionen, d.h. "letzte" oder "erste" Kontakt- bzw. Berührposition der beiden Verschlusselemente, sind nicht wie beim Stand der Technik gleich, sondern gemäß der Erfindung in der Weise unterschiedlich, dass der Freigabeweg des Öffnens größer als der Fixierweg des Fixierens ist.

Vorteilhafterweise umfasst das erste Verschlusselement wenigstens das Hindernis, wobei das Hindernis als Auskragabschnitt des ersten Verschlusselementes ausgebildet ist. Hierdurch ist das zu überwindende Hindernis in vorteilhafter Weise ausbildbar und ausformbar, was z.B. besonders kostengünstig ist. Gegebenenfalls kann mittels dem Auskragabschnitt eine vorteilhafte Vorspannung und/oder Losbrechkraft generiert werden. Der Auskragabschnitt kann als Arretierung und/oder Rasterung ausgebildet werden. Dies verbessert das Halten/Fixieren der Abdeckeinheit an der Öffnung bzw. dem Rahmen oder dergleichen.

In einer besonderen Weiterbildung der Erfindung ist das Hindernis und/oder der Auskragabschnitt wenigstens teilweise in Richtung des Fixierweges ausgerichtet und/oder ist ein Hinterschnitt des Hindernisses und/oder Auskragabschnittes vorgesehen und/oder ist zwischen dem Fixierweg und einer Längsachse des Hindernisses und/oder Auskragabschnittes ein spitzer Winkel vorgesehen. So kann beispielsweise eine vorteilhafte Arretierung bzw. Vorspannkraft zum Halten/Vorspannen der Abdeckeinheit an der Öffnung bzw. dem Rahmen verwirklicht werden. Andererseits kann auch eine definierte bzw. größere Losbrechkraft und/oder Hinderniskraft ohne großen konstruktiven oder wirtschaftlichen Aufwand verwirklicht werden. Diese Arretierung bzw. Vorspannkraft oder Losbrechkraft bzw. Hinderniskraft wirkt gemäß dieser vorteilhaften Maßnahme wenigstens teilweise in Schließ- bzw.

Fixierrichtung bzw. in Richtung des Fixierens. Diese Kraft kann dementsprechend mittels des Hinterschnittes bzw. des Auskragabschnittes in vorteilhafter Weise eingestellt bzw. definiert werden. Hiermit kann auch ein sog. "sattelfestes Schließen" verwirklicht werden, was allgemein als qualitativ hochwertig vom Bediener bzw. Nutzer empfunden wird.

Darüber hinaus wird gerade mittels dem spitzen Winkel des Auskragabschnittes bzw. dem Hinterschnitt erreicht, dass das Schließen kräftemäßig leichter ist als das Öffnen. Dies verbessert das Fixieren/Halten der Abdeckeinheit an der Öffnung bzw. dem Rahmen.

Vorzugsweise weist das erste Verschlusselement wenigstens einen elastisch verformbaren Widerhaken auf. Hierdurch verhakt sich das zweite Verschlusselement bzw. die Abdeckeinheit mit dem ersten Verschlusselement bzw. dem Rahmen. So wird zusätzlich ein unbeabsichtigtes Öffnen während dem Betreib bzw. aufgrund von Erschütterungen oder Vibrationen verhindert.

Vorteilhafterweise ist das erste Verschlusselement als elastisch verformbares Elastomerelement ausgebildet, z.B. aus Gummi oder elastischem Kunststoff oder dergleichen. Vorzugsweise ist das erste Verschlusselement bzw. elastisch verformbare Elastomerelement spritzgegossen. Hiermit kann eine besonders kostengünstige Herstellung des ersten Verschlusselementes selbst mit vergleichsweise komplexen Querschnitten/Formen bzw. Geometrien wie z.B. mit Auskragabschnitt, Widerhaken bzw. Hinterschnitt, etc. realisiert werden.

In einer vorteilhaften Variante der Erfindung ist ein erster Querschnitt des Hindernisses und/oder Auskragabschnittes kleiner als ein zweiter Querschnitt eines zweiten Abschnittes des ersten Verschlusselementes ausgebildet. Hiermit kann die Vorspannkraft und/oder das Widerhaken und/oder das Schließen mittels der vorteilhaften Dimensionierung und/oder Formgebung des ersten Querschnittes des Hindernisses und/oder Auskragabschnittes separat zum zweiten Querschnitt des zweiten Abschnittes des ersten Verschlusselementes verwirklicht und eingestellt werden. So kann gerade durch das Widerhaken des Hindernisses bzw. des Auskragabschnittes/Hinterschnittes ein Verformen des zweiten Querschnittes des zweiten Abschnittes des ersten Verschlusselementes bewirken, was aufgrund des größeren, zweiten Querschnittes zu einer größeren Verformungskraft bzw. Widerstandskraft beim Öffnen führt. Auch dies kann in vorteilhafter Weise mittels des zweiten Querschnittes bzw. der Formgebung des zweiten Abschnittes eingestellt bzw. dimensioniert werden. Vorzugsweise ist der zweite Abschnitt in Richtung des Verstellweges ausgerichtet.

Vorteilhafterweise weist das zweite Verschlusselement einen viereckigen Querschnitt auf. Oftmals weisen z.B. Tragrahmen oder dergleichen Rahmen- bzw. Rohrelemente mit viereckigem Querschnitt auf, so dass hierdurch eine Doppelnutzung dieser Rahmenelemente ermöglicht ist. Vorzugsweise weist das zweite Verschlusselement einen in Richtung Verstellweg rutenförmigen Querschnitt auf, d.h. dass in vorteilhafter Weise der Querschnitt quadratisch ist und/oder die Seiten im Winkel von 45° zum Verstellweg ausgerichtet sind.

Generell ist von Vorteil, eine oder mehrere oder alle Seiten des zweiten Verschlusselementes schräg bzw. winklig zum Verstellweg anzuordnen. So ist ein vorteilhaftes "Einfädeln" und/oder "Ausfädeln" bzgl. dem ersten Verschlusselement realisierbar.

In einer bevorzugten Weiterbildung der Erfindung sind an der Abdeckeinheit wenigstens zwei erste Verschlusselemente angeordnet. Hiermit kann beispielsweise eine gleichmäßige und/oder symmetrische Beaufschlagung bzw. Kraftwirkung erzeugt werden, was sich positiv auswirkt. Gegebenenfalls sind die beiden ersten Verschlusselemente an zwei gegenüberliegend angeordneten Seitenrändern/Randbereichen der Abdeckeinheit angeordnet.

Vorzugsweise ist zwischen zwei ersten Verschlusselemente das zweite Verschlusselement angeordnet. So kann das zweite Verschlusselement beidseitig mit je einem ersten Verschlusselement in Kontakt und zudem mit Kraft beaufschlagt werden. Dies ist einerseits platzsparend und andererseits wird hiermit eine symmetrische Kraftbeaufschlagung gewährleistet.

Vorteilhafterweise umfasst eine einstückige Verschlusselemente-Baueinheit wenigstens zwei erste Verschlusselemente. Dies ermöglicht eine besonders platzsparende und kostengünstige Bauweise sowie Herstellung.

In einer besonderen Variante der Erfindung weist das zweite Verschlusselement eine zum ersten Verschlusselement ausgerichtete oder exponierte Kontur auf, wobei diese Kontur senkrecht zum Verstellweg nicht-symmetrisch ist. Hiermit können durch diese vorteilhafte Gestaltung bzw. Formgebung des zweiten Verschlusselementes die beiden unterschiedlich großen Wege gemäß der Erfindung, d.h. Freigabeweg und Fixierweg, verwirklicht werden.

Generell kann mit Hilfe der Erfindung erreicht werden, dass der Zielkonflikt besteht in der angenehmen Bedienung mit Handkraft und gleichzeitig dem Vermeiden von unerwünschten Aufspringen der Hauben in vorteilhafter Weise gelöst wird. So kann der Anwender bzw. Bediener die Abdeckeinheit bzw. Hauben angenehmer und schneller öffnen. Hierbei kann die Erfindung u.a. nachfolgend aufgelistete Vorteile bzw. Merkmale sowohl einzeln als auch teilweise oder alle miteinander in kombinierter Weise aufweisen:
- Die Erfindung erlaubt der Abdeckeinheit bzw. der Haube oder Tür eine verhältnismäßig große Relativbewegung zu maschinenfesten Bauteilen ohne aufzuspringen. Dadurch können die Losbrechkräfte gering gehalten werden. Der große Weg und die Vorspannung verhindert dabei jedoch das unerwünschte Aufspringen der Haube.
- Im Wesentlichen mindestens ein elastisches Bauteil, welches eine Haube durch Kraft- und/oder Formschluss an mindestens einem maschinen-feststehenden Teil in geschlossener Position hält, d.h. arretiert.
- Beim Schließ- und beim Öffnungsvorgang der Abdeckeinheit bzw. Haube muss sich das Elastomerbauteil ausgehend von der arretierten Position weiter elastisch verformen, so dass beim Öffnen und Schließen der Abdeckeinheit bzw. Haube erhöhte Kräfte notwendig sind und die arretierte Abdeckeinheit bzw. Haube in geschlossener Stellung gehalten wird.
- Bevorzugt ist das Elastomerbauteil mit einer oder mehreren Segmenten, Nasen, Auskragungen, Widerhaken oder dergleichen versehen, die sich in Schließ- und Öffnungsrichtung unterschiedlich verformen müssen, wodurch durch Ausführung der Geometrie dieser Segmente die Schließ-und Öffnungskraft voneinander unabhängig ausgelegt werden können.
- In bevorzugter Ausführung kann beim Schließen ein einfaches Biegen der Segmente erfolgen. Beim Öffnen kann ein Umstülpen erforderlich sein, d.h. erhöhter Kraftbedarf.
- Das feststehende Bauteil kann als einzelnes Bauteil ausgeführt werden, der Querschnitt kann rund oder mit einer die Halte- Schließ- und Öffnungskraft beeinflussenden Geometrie ausgeführt werden.
- In einer bevorzugten Ausführung werden zwei Elastomerbauteile ausgeführt, die an einem, bevorzugt an zwei feststehenden Bauteilen arretieren. Dadurch wird sich bei symmetrischer Anordnung die Abdeckeinheit bzw. Haube beim Schließen in vorteilhafter Weise zentrieren.
- In einer vorteilhaften Ausführung sind die beiden Elastomerbauteile am oder nahe zum Öffnungsende der Abdeckeinheit bzw. Haube angeordnet, vorzugsweise mit Hauptverformungsrichtung senkrecht zur Schwenk-/Scharnierachse und zentrieren die Abdeckeinheit bzw. Haube an zwei Rahmenelementen wie z.B. Rohren eines vorhandenen Schutzrahmens. So können sich z.B. bei der Erstmontage gleiche Spalte zu eben diesen Schutzrahmenrohren ergeben und die Abdeckeinheit bzw. Haube ggf. nur noch an der Verbindung zum Scharnier eine Einstellung benötigt, d.h. die Abdeckeinheit bzw. Haube zentriert sich an der Öffnungsseite selbst und kann einfach eingestellt werden.
- Das Verhältnis von Form- und Kraftschluss der Fixierung bzw. Arretierung kann z.B. über Zugabe von Gleitmittel zum Werkstoff der Elastomerbauteile beeinflusst werden, um ein beabsichtigte Kombination von Halte- Schließ- und Öffnungskraft zu erzielen.
- Im arretierten Zustand wird die Abdeckeinheit bzw. Haube in vorteilhafter Weise am offenen Ende elastisch, z.B. zum Schutzrahmen, gelagert, d.h. reduzierte Schwingbelastung für die Abdeckeinheit bzw. Haube.
- Das Elastomerbauteil kann direkt mit der Abdeckeinheit bzw. Haube verbunden werden, z.B. verschraubt, vernietet, geklebt oder bevorzugt durch Formschluss.
- Bei Befestigung durch Formschluss wird das Elastomerbauteil bevorzugt auf ein festes, mit der Abdeckeinheit bzw. Haube verbundenes Halteteil aufgesteckt. Dazu kann das Halteteil stellenweise Pfeilförmig bzw. mit einer Spitze oder konisch oder ggf. als Widerhaken ausgeführt werden, so dass die Montage des Elastomerbauteils mit moderatem Kraftaufwand erfolgen kann, gegen Lösen aber ein erhöhter Kraftaufwand erforderlich ist, um das Elastomerbauteil im Betrieb sicher in seiner Position zu halten.
- Alternativ oder zusätzlich kann das Elastomerbauteil mit entsprechender Geometrie für leichtes Montieren und erschwertes sicheres Halten ausgeführt werden.
- Alternativ kann das bzw. können die Elastomerbauteile maschinenfest angebracht werden und das Gegenstück bzw. die Gegenstücke an der Abdeckeinheit bzw. Haube fixiert/angeordnet werden.
- Die Geometrie des Gegenstücks kann praktisch beliebig angepasst werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: ein schematisch, teilweise geschnitten dargestellter Ausschnitt einer ersten Verschlussvariante gemäß der Erfindung in Verschlussposition und in teilweise geöffneter Position,
- Figur 2: ein schematisch dargestellter Querschnitt durch eine zweite Verschlussvariante gemäß der Erfindung und
- Figur 3: schematisch dargestellte Querschnitt einer dritten Verschlussvariante gemäß der Erfindung in verschiedenen Position des Schließens als auch des Öffnens.

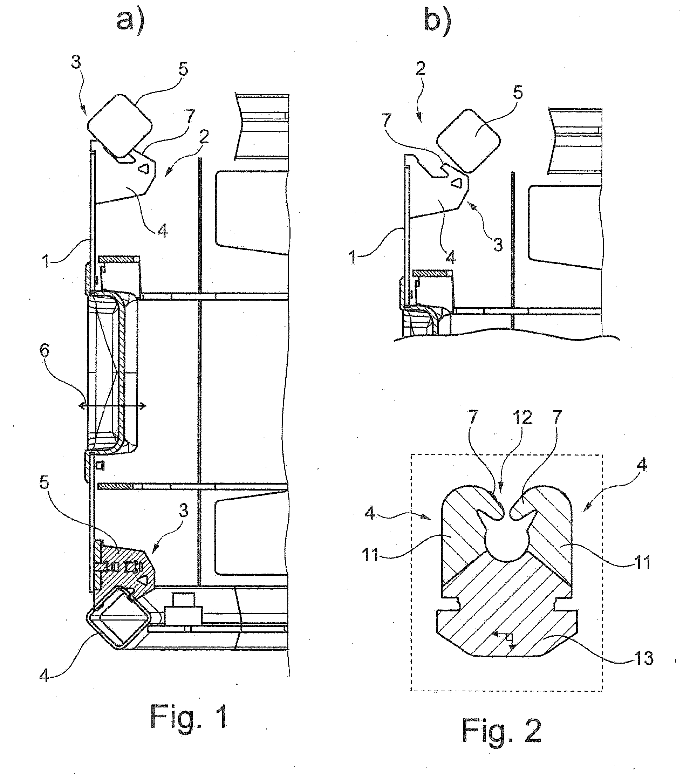

In Figur 1 ist schematisch, in teilweise geschnittener Darstellung ein Ausschnitt einer Abdeckeinheit 1 bzw. Motorhaube 1 in Verschlussposition (vgl. Figur 1a) )und in teilweise geöffneter Position (vgl. Figur 1b) ) zu erkennen. Hierbei verschließt die Motorhaube 1 eine Motoröffnung 2 im Betrieb und ermöglicht ein Öffnen und ggf. Warten etc. des nicht näher dargestellten Antriebsmotors oder dergleichen.

Ein Verschluss 3 umfasst einerseits ein fest am Tragrahmen einer mobilen Arbeitsmaschine wie eines Rüttlers oder dergleichen angeordnetes sog. zweites Verschlusselement 5 bzw. ein Vierkantrohr 5, das mit einem Gummielement 4 bzw. Elastomerelement 4 bzw. einem sog. ersten Verschlusselement 4 gemäß der Erfindung in Wirkverbindung bringbar ist. Dieses Gummielement 4 weist eine Nase 7 bzw. Auskragung 7 bzw. einen Widerhaken 7 auf, womit die Motorhaube 1 in der Verschlussposition gemäß Figur 1a) gegen ein unbeabsichtigtes bzw. selbsttätiges Öffnen wirkungsvoll gesichert ist. Das bedeutet, dass hier die Motorhaube 4 in Richtung eines Verstellweges 6 fixiert bzw. gehalten ist.

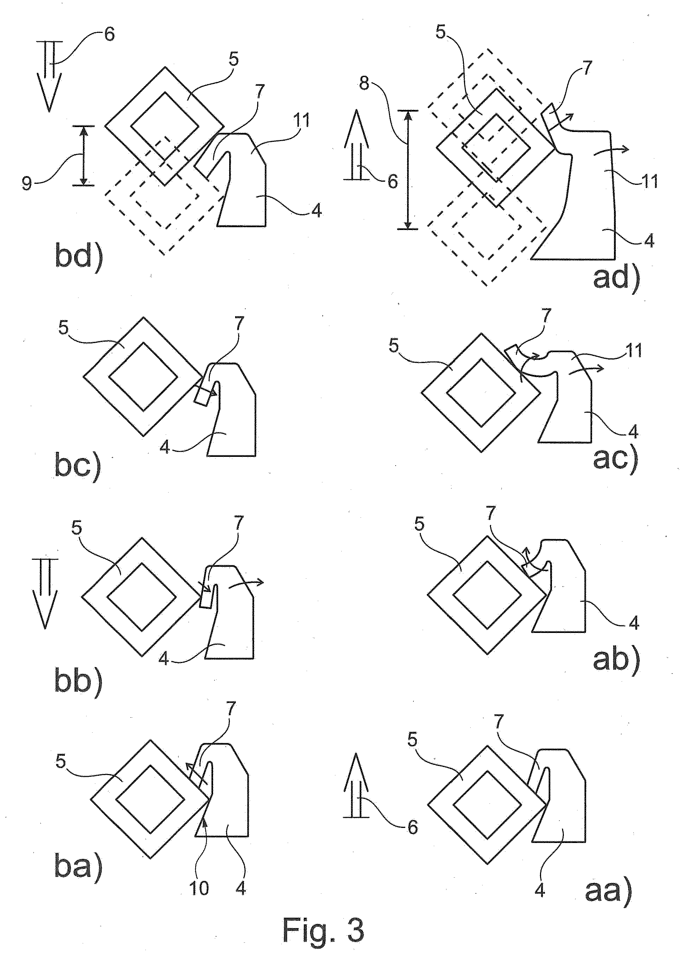

In Figur 1b) ist eine teilweise geöffnete Position der Motorhaube 4 dargestellt, wobei das Gummielement 4 gerade mit dem Rohr 5 in Berührung bzw. Kontakt ist. Diese Position entspricht prinzipiell auch Figur 3bb). Die Verschlussposition gemäß Figur 1a) entspricht prinzipiell auch den in den Figuren 3aa) und 3ba) dargestellten Verschlusspositionen.

In Figur 3 sind nämlich zur Veranschaulichung der Erfindung verschiedene Positionen bzw. Ausformungen des Verschlusses 3 bzw. der beiden Verschlusselemente 4, 5 schematisch abgebildet. So zeigen die Figuren 3a) verschiedene Positionen beim Öffnen bzw. Öffnungsvorgang und die Figuren 3b) verschiedene Positionen beim Schließen bzw. Schließvorgang.

In der Figur 3ad) sind z.T. gestrichelt die beiden "maximalen" Positionen des Rohres 5 bzw. zweiten Verschlusselementes 5 in Bezug zum ersten Verschlusselement 4 bzw. Gummielement 4 dargestellt. So wird ersichtlich, dass ein Freigabeweg 8 deutlich größer ist als ein Fixierweg 9. Hierbei erstrecken sich der Freigabeweg 8 und der Fixierweg 9 einerseits von der Verschlussposition (vgl. in den Figuren 3ad) und 3bd) jeweils gestrichelt dargestellt sowie vgl. Figuren 3aa) und 3ba) ) jeweils bis zu einer Position, in der sich einerseits die beiden Verschlusselemente 4, 5 erstmals in Richtung des Verstellweges beim Schließen berühren bzw. Kontakt haben (vgl. Figur 3bd) ) oder in der sich andererseits die beiden Verschlusselemente 4, 5 zuletzt berühren bzw. Kontakt haben (vgl. Figur 3ad) ).

Zum besseren Verständnis der Bewegungsabläufe beim Öffnen und Schließen sind zudem Pfeile eingezeichnet, die die Verformung bzw. Verbiegungen des Gummielementes 4 bzw. dessen Nase 7 schematisch darstellen. So wird ersichtlich, dass die Nase 7 einen kleineren Querschnitt als in Flankenabschnitt 11 des Gummielementes 4 aufweist, so dass dieser Abschnitt 11 sich sowohl beim Öffnen als auch beim Schließen/Fixieren weniger verformt als die Nase 7. Gerade beim Öffnen erzeugt dieser Abschnitt 11 jedoch in vorteilhafter Weise eine Rückstellkraft bzw. einen Widerstand, die/der zu überwinden ist. Dies wirkt sich wie auch die verschieden langen Wege, d.h. Freigabeweg 8 und Fixierweg 9, positiv auf den Verschluss 3 im Sinn der Erfindung aus.

So muss beim Öffnen gemäß Figuren 3a) deutlich mehr Energie aufgebracht werden als beim Schließen gemäß den Figuren 3b), was ein unbeabsichtigtes Öffnen im Betrieb des Rüttlers oder dergleichen wirkungsvoll verhindert und somit von großem Vorteil ist. Die vom Nutzer aufzubringende Öffnungskraft kann jedoch in vorteilhafter Weise mittels der Dimensionierung des Gummielementes 4 bzw. der Nase 7 und/oder des Abschnittes 11 eingestellt bzw. begrenzt werden. So kann beispielsweise eine maximal aufzubringende Öffnungskraft von ca. 200N verwirklicht werden, was für normale Nutzer angenehm ist.

Das Gummielement 4 ist in vorteilhafter Weise derart geformt, dass beim Verschließen in der Verschlussposition gemäß Figur 3ba) die Nase 7 nach dem Einbiegen gemäß Figur 3bb) herausschnappt und zudem das Rohr 5 an einer zweiten Stelle 10 berührt, wobei mittels der Stelle 10 eine vorteilhafte Vorspannung des Verschlusses 3 verwirklicht wird. So kann die Vorspannkraft durch vorteilhafte Dimensionierung der Nase 7 und der Stelle 10 eingestellt werden.

In Figur 2 ist eine Baueinheit 12 schematisch dargestellt, in die mittig ein nicht näher dargestelltes sog. zweites Verschlusselement 5, hier jedoch möglichst mit rundem Querschnitt, eingebracht werden kann. Die beiden Nasen 7 sowie die beiden Abschnitte 11 der Baueinheit 12 entsprechen denen der Varianten gemäß Figur 1 oder 3 und verformen sich prinzipiell entsprechend beim Öffnen bzw. Schließen/Fixieren. Zudem sind diese Abschnitte 11 an einem Basis- bzw. Metallelement 13 fest fixiert, so dass die einstückig handhabbare Baueinheit 12 in vorteilhafter Weise verwirklicht wird.

Diese Baueinheit 12 verwirklicht eine beidseitige bzw. symmetrische Kraftbeaufschlagung der in Figur 2 nicht näher dargestellten Abdeckeinheit 1. Auch gemäß Figur 1 ermöglichen in vorteilhafter Weise die beiden einzelnen bzw. voneinander beabstandeten Verschlüsse 3 bzw. Verschlusselemente 4, die beidseitig an einem Randabschnitt der Motorhaube 1 angeordnet sind, eine symmetrische bzw. zentrierende Kraftbeaufschlagung.

### Bezugszeichenliste

- 1: Motorhaube
- 2: Öffnung
- 3: Verschluss
- 4: Gummielement
- 5: Rohr
- 6: Verstellweg
- 7: Nase
- 8: Freigabeweg
- 9: Fixierweg
- 10: Stelle
- 11: Abschnitt
- 12: Baueinheit
- 13: Basiselement

## Patentansprüche

1. Mobile Arbeitsmaschine mit einem Tragrahmen und mit einer Antriebseinheit zum Antreiben wenigstens eines Antriebselementes und/oder eines Arbeitselementes, wobei wenigstens eine um eine Schwenkachse verstellbare Abdeckeinheit (1) zum Abdecken/Schließen oder Öffnen einer Öffnung (2) vorgesehen ist, wobei wenigstens eine Verschlusseinheit (3) zum Fixieren/Halten der Abdeckeinheit (1) in einer Verschlussposition vorgesehen ist, wobei die Verschlusseinheit (3) wenigstens ein erstes Verschlusselement (4) und ein zweites, entlang eines Verstellweges (6) relativ zum ersten Verschlusselement (4) verstellbares Verschlusselement (5) aufweist, wobei die Verschlusseinheit (3) wenigstens ein Hindernis (7) zum Überwinden bei der Relativerstellung des ersten und zweiten Verschlusselementes (4, 5) aufweist, so dass beim Öffnen das Hindernis (7) einen in Richtung des Verstellweges (6) ausgerichteten Freigabeweg (8) und bei Schließen/Fixieren das Hindernis (7) einen in Richtung des Verstellweges (6) ausgerichteten Fixierweg (9) ausbildet, **dadurch gekennzeichnet, dass** der Freigabeweg (8) des Öffnens größer als der Fixierweg (9) des Fixierens ist und dass das erste Verschlusselement (4) wenigstens das Hindernis (7) umfasst und dass das Hindernis (7) als Auskragabschnitt (7) des ersten Verschlusselementes (4) ausgebildet ist.

2. Arbeitsmaschine nach Anspruch 1, **dadurch gekennzeichnet, dass** der Fixierweg (8) des Fixierens sich von einer Erstkontaktposition bis zu der Verschlussposition erstreckt, wobei die Erstkontaktposition als erste Kontaktposition in Richtung des Verstellweges (6) beim Fixieren ausgebildet ist und/oder dass der Freigabeweg (8) des Öffnens sich von der Verschlussposition als Öffnungsanfangskontaktposition bis zu einer End-Kontaktposition erstreckt, wobei die End-Kontaktposition als letzte Loslass-Kontaktposition in Richtung des Verstellweges (6) beim Öffnen ausgebildet ist.

3. Arbeitsmaschine nach einem der vorgenannten Ansprüche, **dadurch gekennzeichnet, dass** das Hindernis (7) und/oder der Auskragabschnitt (7) wenigstens teilweise in Richtung des Fixierweges (8) ausgerichtet ist und/oder dass zwischen dem Fixierweg (8) und einer Längsachse des Hindernisses (7) und/oder Auskragabschnittes (7) ein spitzer Winkel vorgesehen ist.

4. Arbeitsmaschine nach einem der vorgenannten Ansprüche, **dadurch gekennzeichnet, dass** das erste Verschlusselement (4) als elastisch verformbares Elastomerelement (4) ausgebildet ist.

5. Arbeitsmaschine nach einem der vorgenannten Ansprüche, **dadurch gekennzeichnet, dass** das erste Verschlusselement (4) wenigstens einen elastisch verformbaren Widerhaken (7) aufweist.

6. Arbeitsmaschine nach einem der vorgenannten Ansprüche, **dadurch gekennzeichnet, dass** ein erster Querschnitt des Hindernisses (7) und/oder Auskragabschnittes (7) kleiner als ein zweiter Querschnitt eines zweiten Abschnittes (11) des ersten Verschlusselementes (4) ausgebildet ist.

7. Arbeitsmaschine nach einem der vorgenannten Ansprüche, **dadurch gekennzeichnet, dass** das zweite Verschlusselement (5) einen viereckigen Querschnitt aufweist.

8. Arbeitsmaschine nach einem der vorgenannten Ansprüche, **dadurch gekennzeichnet, dass** an der Abdeckeinheit (1) wenigstens zwei erste Verschlusselemente (4) angeordnet sind.

9. Arbeitsmaschine nach dem vorgenannten Anspruch, **dadurch gekennzeichnet, dass** zwischen zwei ersten Verschlusselemente (4) das zweite Verschlusselement (5) angeordnet ist.

10. Arbeitsmaschine nach einem der vorgenannten Ansprüche, **dadurch gekennzeichnet, dass** eine einstückige Verschlusselemente-Baueinheit (12) wenigstens zwei erste Verschlusselemente (4) umfasst.

11. Arbeitsmaschine nach einem der vorgenannten Ansprüche, **dadurch gekennzeichnet, dass** wenigstens eine Vorspanneinheit zum Vorspannen der Verschlusseinheit (3) und/oder zum Erzeugen einer auf das erste Verschlusselement (4) oder die Abdeckeinheit (1) wirkende Vorspannkraft vorgesehen ist.

12. Arbeitsmaschine nach einem der vorgenannten Ansprüche, **dadurch gekennzeichnet, dass** das erste Verschlusselement (4) und/oder das zweite Verschlusselement (5) an einem Randabschnitt der Abdeckeinheit (1) angeordnet ist.

13. Arbeitsmaschine nach einem der vorgenannten Ansprüche, **dadurch gekennzeichnet, dass** das erste Verschlusselement (4) und/oder das zweite Verschlusselement (5) an einem der Schwenkachse gegenüberliegenden Randabschnitt der Abdeckeinheit (1) angeordnet ist.

14. Arbeitsmaschine nach einem der vorgenannten Ansprüche, **dadurch gekennzeichnet, dass** die Abdeckeinheit (1) als Motorhaube (1) oder als Kabinentür ausgebildet ist.

## Claims

1. Mobile work machine having a load-bearing frame and having a drive unit for driving at least one drive element and/or one work element, wherein at least one covering unit (1) which is adjustable about a pivot axis and serves for covering/closing or opening an opening (2) is provided, wherein at least one closure unit (3) for fixing/holding the covering unit (1) in a closure position is provided, wherein the closure unit (3) has at least one first closure element (4) and one second closure element (5), which is adjustable along an adjustment path (6) relative to the first closure element (4), wherein the closure unit (3) has at least one obstacle (7) to be overcome during the relative adjustment of the first and second closure elements (4, 5) so that, during opening, the obstacle (7) forms a release path (8), which is oriented in the direction of the adjustment path (6), and, during closing/fixing, the obstacle (7) forms a fixing path (9), which is oriented in the direction of the adjustment path (6), **characterized in that** the release path (8) for the opening is longer than the fixing path (9) for the fixing, and **in that** the first closure element (4) comprises at least the obstacle (7), and **in that** the obstacle (7) is in the form of a projecting portion (7) of the first closure element (4).

2. Work machine according to Claim 1, **characterized in that** the fixing path (8) for the fixing extends from a first-contact position as far as the closure position, wherein the first-contact position is configured to be a first contact position in the direction of the adjustment path (6) during the fixing, and/or **in that** the release path (8) for the opening extends from the closure position, as an opening initial-contact position, as far as an end-contact position, wherein the end-contact position is configured to be a last, releasing contact position in the direction of the adjustment path (6) during the opening.

3. Work machine according to either of the preceding claims, **characterized in that** the obstacle (7) and/or the projecting portion (7) are/is oriented at least partially in the direction of the fixing path (8), and/or **in that** an acute angle is provided between the fixing path (8) and a longitudinal axis of the obstacle (7) and/or projecting portion (7).

4. Work machine according to one of the preceding claims, **characterized in that** the first closure element (4) is in the form of an elastically deformable elastomer element (4).

5. Work machine according to one of the preceding claims, **characterized in that** the first closure element (4) has at least one elastically deformable barb (7).

6. Work machine according to one of the preceding claims, **characterized in that** a first cross section of the obstacle (7) and/or projecting portion (7) is configured to be smaller than a second cross section of a second portion (11) of the first closure element (4).

7. Work machine according to one of the preceding claims, **characterized in that** the second closure element (5) has a quadrilateral cross section.

8. Work machine according to one of the preceding claims, **characterized in that** at least two first closure elements (4) are arranged on the covering unit (1).

9. Work machine according to the preceding claim, **characterized in that** the second closure element (5) is arranged between two first closure elements (4).

10. Work machine according to one of the preceding claims, **characterized in that** a one-piece closure-element structural unit (12) comprises at least two first closure elements (4).

11. Work machine according to one of the preceding claims, **characterized in that** at least one preload unit for preloading the closure unit (3) and/or for generating a preload force acting on the first closure element (4) or the covering unit (1) is provided.

12. Work machine according to one of the preceding claims, **characterized in that** the first closure element (4) and/or the second closure element (5) are/is arranged on an edge portion of the covering unit (1).

13. Work machine according to one of the preceding claims, **characterized in that** the first closure element (4) and/or the second closure element (5) are/is arranged on an edge portion of the covering unit (1) that is situated opposite the pivot axis.

14. Work machine according to one of the preceding claims, **characterized in that** the covering unit (1) is designed as a bonnet (1) or as a cabin door.

## Revendications

1. Machine de travail mobile comprenant un châssis support et une unité d'entraînement pour entraîner au moins un élément d'entraînement et/ou un élément de travail, au moins une unité de recouvrement (1) réglable autour d'un axe de pivotement étant prévue pour recouvrir/fermer ou ouvrir une ouverture (2), au moins une unité de fermeture (3) étant prévue pour fixer/maintenir l'unité de recouvrement (1) dans une position de fermeture, l'unité de fermeture (3) présentant au moins un premier élément de fermeture (4) et un deuxième élément de fermeture (5) réglable le long d'une course de réglage (6) par rapport au premier élément de fermeture (4), l'unité de fermeture (3) présentant au moins un obstacle (7) à surmonter lors du positionnement relatif du premier et du deuxième élément de fermeture (4, 5), de sorte que, lors de l'ouverture, l'obstacle (7) forme une course de libération (8) orientée dans la direction de la course de réglage (6) et que, lors de la fermeture/fixation, l'obstacle (7) forme une course de fixation (9) orientée dans la direction de la course de réglage (6), **caractérisé en ce que** la course de libération (8) de l'ouverture est plus grande que la course de fixation (9) de la fixation et le premier élément de fermeture (4) comprend au moins l'obstacle (7), et **en ce que** l'obstacle (7) est réalisé sous forme d'une section en porte-à-faux (7) du premier élément de fermeture (4).

2. Machine de travail selon la revendication 1, **caractérisée en ce que** la course de fixation (8) de la fixation s'étend d'une première position de contact jusqu'à la position de fermeture, la première position de contact étant conçue comme étant une première position de contact dans la direction de la course de réglage (6) lors de la fixation et/ou **en ce que** la course de libération (8) de l'ouverture s'étend depuis la position de fermeture en tant que position de contact de début d'ouverture jusqu'à une position finale de contact, la position finale de contact étant conçue comme dernière position de contact de relâchement dans la direction de la course de réglage (6) lors de l'ouverture.

3. Machine de travail selon l'une des revendications précédentes, **caractérisée en ce que** l'obstacle (7) et/ou la section en porte-à-faux (7) est orienté (e) au moins en partie dans la direction de la course de fixation (8) et/ou **en ce qu'**un angle aigu est prévu entre la course de fixation (8) et un axe longitudinal de l'obstacle (7) et/ou de la section en porte-à-faux (7).

4. Machine de travail selon l'une des revendications précédentes, **caractérisée en ce que** le premier élément de fermeture (4) est conçu sous la forme d'un élément en élastomère (4) déformable élastiquement.

5. Machine de travail selon l'une des revendications précédentes, **caractérisée en ce que** le premier élément de fermeture (4) présente au moins un crochet (7) déformable élastiquement.

6. Machine de travail selon l'une des revendications précédentes, **caractérisée en ce qu'**une première section transversale de l'obstacle (7) et/ou de la partie en porte-à-faux (7) est plus petite qu'une deuxième section transversale d'une deuxième partie (11) du premier élément de fermeture (4).

7. Machine de travail selon l'une des revendications précédentes, **caractérisée en ce que** le deuxième élément de fermeture (5) présente une section transversale quadrangulaire.

8. Machine de travail selon l'une des revendications précédentes, **caractérisée en ce qu'**au moins deux premiers éléments de fermeture (4) sont agencés sur l'unité de recouvrement (1).

9. Machine de travail selon la revendication précédente, **caractérisée en ce que** le deuxième élément de fermeture (5) est agencé entre deux premiers éléments de fermeture (4).

10. Machine de travail selon l'une des revendications précédentes, **caractérisée en ce qu'**un ensemble d'éléments d'obturation (12) d'une seule pièce comprend au moins deux premiers éléments d'obturation (4).

11. Machine de travail selon l'une des revendications précédentes, **caractérisée en ce qu'**au moins une unité de précontrainte est prévue pour précontraindre l'unité de fermeture (3) et/ou pour générer une force de précontrainte agissant sur le premier élément de fermeture (4) ou sur l'unité de recouvrement (1).

12. Machine de travail selon l'une des revendications précédentes, **caractérisée en ce que** le premier élément de fermeture (4) et/ou le deuxième élément de fermeture (5) est agencé sur une partie de bordure de l'unité de recouvrement (1).

13. Machine de travail selon l'une des revendications précédentes, **caractérisée en ce que** le premier élément de fermeture (4) et/ou le deuxième élément de fermeture (5) est agencé sur une section de bordure de l'unité de recouvrement (1) opposée à l'axe de pivotement.

14. Machine de travail selon l'une des revendications précédentes, **caractérisée en ce que** l'unité de recouvrement (1) est conçue sous la forme d'un capot moteur (1) ou d'une porte de cabine.
